# EUROPÄISCHE PATENTSCHRIFT

(11) **EP 3 596 767 B1**
(45) Veröffentlichungstag und Bekanntmachung des Hinweises auf die Patenterteilung: **09.09.2020**
(21) Anmeldenummer: 18745554.8
(22) Anmeldetag: 20.07.2018
(51) Int. Cl.: H01M 4/86, H01M 8/0243, H01M 8/1018

(54) **KATALYTISCHE ZUSAMMENSETZUNG, VERFAHREN ZU IHRER HERSTELLUNG, IHRE VERWENDUNG ZUR HERSTELLUNG EINER BRENNSTOFFZELLENELEKTRODE SOWIE BRENNSTOFFZELLE MIT EINER SOLCHEN**
CATALYTIC COMPOSITION, PROCESS FOR ITS PREPARATION, ITS USE FOR PREPARING A FUEL CELL ELECTRODE, AS WELL AS FUEL CELL PROVIDED WITH THE SAME
COMPOSITION CATALYTIQUE, PROCÉDÉ POUR SA PRÉPARATION, SON UTILISATION POUR PRÉPARER UNE ÉLECTRODE DE PILE À COMBUSTIBLE, AINSI QUE PILE À COMBUSTIBLE COMPRENANT CETTE DERNIÈRE

(30) Priorität: 23.08.2017 DE 102017214725
(43) Veröffentlichungstag der Anmeldung: 22.01.2020
(73) Patentinhaber: Audi AG, 85045 Ingolstadt (DE); Volkswagen AG, 38440 Wolfsburg (DE)
(72) Erfinder: YE, Siyu, Burnaby, British Columbia V5J 5J8 (CA); BAI, Kyoung, Burnaby, British Columbia V5J 5J8 (CA); BANHAM, Dustin William H., Burnaby, British Columbia V5J 5J8 (CA); BASHYAM, Rajesh, Burnaby, British Columbia V5J 5J8 (CA); YOUNG, Alan Patrick, Burnaby, British Columbia V5J 5J8 (CA)
(86) Internationale Anmeldenummer: PCT/EP2018/069730
(87) Internationale Veröffentlichungsnummer: WO 2019/037974

(56) Entgegenhaltungen:
- EP-A1- 2 882 017
- WO-A1-2012/026916
- WO-A1-2016/157746
- DE-A1-102010 028 242
- JP-A- 2008 052 933
- JP-A- 2009 211 869
- US-A1- 2010 009 240

## Beschreibung

Die Erfindung betrifft eine katalytische Zusammensetzung für eine Brennstoffzellenelektrode, ein Verfahren zu ihrer Herstellung und ihre Verwendung zur Herstellung einer Brennstoffzellenelektrode, insbesondere einer katalytisch beschichteten Membran oder einer Gasdiffusionselektrode. Die Erfindung betrifft weiterhin eine Brennstoffzelle, die eine katalytische Schicht aufweist, welche aus der katalytischen Zusammensetzung herstellbar ist.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für *membrane electrode assembly*), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (*stack*) angeordneter MEA gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Die katalytischen Elektroden in Brennstoffzellen liegen zumeist in Form einer katalytischen Beschichtung vor. Im Falle einer Beschichtung auf der Polymerelektrolytmembran spricht man auch von einer katalytisch beschichteten Membran (CCM für *catalyst coated membrane*). Ist die Beschichtung auf einer Diffusionslage angeordnet, so wird diese auch als Gasdiffusionselektrode bezeichnet. Die katalytische Schicht wird in der Regel als Suspension (Katalysatortinte) auf das entsprechende Substrat aufgebracht, die das katalytisch aktive Material, also das katalytische Edelmetall, aufweist, welches auf einem elektrisch leitfähigen Kohlenstoffmaterial geträgert vorliegt. Daneben ist bekannt, der Suspension ein polymeres lonomer als Bindemittel und zur Verbesserung des Elektronentransports zuzugeben. Nach dem Aufbringen auf dem Substrat wird die Beschichtung getrocknet, sodass die resultierende katalytische Schicht (CL für *catalyst layer*) aus dem geträgerten katalytisch aktiven Material und dem lonomer besteht.

Aus US 2004/185325 A1 ist ein Verfahren zum Herstellen einer Brennstoffzellenelektrode bekannt, bei dem das katalytisch aktive Material, Kohlenstoff sowie ein lonomer auf einem Substrat aus der Gasphase co-abgeschieden werden. Bei dem Substrat handelt es sich entweder um die Polymerelektrolytmembran oder ein Kohlenstoffträger.

US 2016/156054 A1 beschreibt eine zweilagige katalytische Schicht für eine Brennstoffzelle, wobei eine der Diffusionsschicht zugewandte Subschicht aus Katalysatorpartikeln, die mit einem ersten lonomer beschichtet sind, besteht und eine daran anschließende membrannahe Subschicht aus Partikeln eines zweiten lonomers besteht.

US8148026 B2 beschreibt die Verwendung zweier lonomere unterschiedlicher Äquivalenzmasse in einer Brennstoffzellenelektrode.

EP 2882017 A1 beschreibt die Herstellung einer Brennstoffzellenelektrode, wobei Kohlenstoffnanoröhrchen (CNT) auf einem Substrat aufgewachsen werden, ein Katalysator auf den CNT abgeschieden wird und anschließend die CNT und der Katalysator mit einem lonomer beschichtet werden. Die so hergestellte Zusammensetzung wird auf eine Polymerelektrolytmembran übertragen, um somit eine katalytisch beschichtete Membran (CCM) zu erhalten.

US 7771860 B2 offenbart eine Katalysatorzusammensetzung für eine Brennstoffzelle mit einem Kern-Schale-Aufbau. Ein Kohlenstoffkern ist mit einer "Schale" aus partikulärem katalytischem Material beschichtet, das über ein lonomer an dem Kohlenstoffkern gebunden ist. Die Herstellung erfolgt durch Mischen der Kohlenstoffpartikel, des katalytischen Materials und des lonomers.

Zudem sind katalytische Zusammensetzungen zur Herstellung von Brennstoffzellenelektroden bekannt, umfassend ein katalytisch aktives Material in partikulärer Form, das auf einem Kohlenstoffträger geträgert vorliegt, ein Kohlenstoff-Nanomaterial sowie eine Bindemittelzusammensetzung, in der das katalytisch aktive Material und das Kohlenstoff-Nanomaterial dispergiert vorliegen, wobei die Bindemittelzusammensetzung ein lonomer umfasst (WO 2016/157746 A1, DE 10 2010 028 242 A1, US 2010/0009240 A1, JP 2009-211869 A, JP 2008-052933 A).

EP 2 882 017 A1 offenbart eine katalytische Schicht einer Brennstoffzelle mit einer Schicht von Kohlenstoff-Nanoröhrchen (CNT), die auf einem Substrat aufgewachsen und auf eine Polymerelektrolytmembran transferiert wurden, ein katalytisch aktives Material in partikulärer Form, das auf den CNT geträgert vorliegt, und ein lonomer, das die CNT mit dem katalytisch aktiven Material beschichtet.

Auch in WO 2012/0268916 A1 ist eine katalytische Schicht einer Brennstoffzelle beschrieben, die ein katalytisch aktives Material aufweist, das auf einem Träger geträgert vorliegt und mittels eines lonomers beschichtet ist.

Der Erfindung liegt nun die Aufgabe zugrunde, eine Katalysatorzusammensetzung für eine Brennstoffzellenelektrode zur Verfügung zu stellen, mittels der eine katalytische Schicht herstellbar ist, die eine verbesserte Protonenleitfähigkeit, insbesondere bei geringen relativen Feuchtegehalten, aufweist. Die hohe Protonenleitfähigkeit sollte idealerweise nicht nur zu Beginn der Lebensdauer, sondern auch nach längerem Betrieb der Brennstoffzelle bestehen bleiben. Es soll ferner eine entsprechende Brennstoffzellenelektrode und Brennstoffzelle vorgeschlagen werden.

Diese Aufgabe wird durch eine katalytische Zusammensetzung, ein Verfahren zu ihrer Herstellung, eine Brennstoffzellenelektrode sowie eine Brennstoffzelle mit den Merkmalen der unabhängigen Ansprüche gelöst. Bevorzugte Ausgestaltungen der Erfindung ergeben sich aus den übrigen, in den Unteransprüchen genannten Merkmalen.

Die erfindungsgemäße katalytische Zusammensetzung zur Herstellung von Brennstoffzellenelektroden umfasst ein katalytisch aktives Material in partikulärer Form, das auf einem Kohlenstoffträger geträgert vorliegt, ein Kohlenstoff-Nanomaterial, das mit einem ersten lonomer beschichtet ist, sowie eine ein zweites lonomer umfassende Bindemittelzusammensetzung, in der das katalytisch aktive Material und das beschichtete Kohlenstoff-Nanomaterial dispergiert vorliegen. Das erste und das zweite lonomer können gleich oder unterschiedlich sein.

Es wurde festgestellt, dass eine aus der erfindungsgemäßen katalytischen Zusammensetzung hergestellte katalytische Schicht eine höhere Protonenleitfähigkeit gegenüber herkömmlichen katalytischen Schichten aufweist, die ein unbeschichtetes Nanomaterial oder gar kein Nanomaterial aufweisen. Zudem bleibt die hohe Protonenleitfähigkeit auch über eine längere Betriebsdauer der Brennstoffzelle erhalten. Ohne sich auf eine Theorie festlegen zu wollen, wird vermutet, dass das lonomer-beschichtete Nanomaterial zweierlei Funktionen in einer aus der katalytischen Zusammensetzung hergestellten katalytischen Schicht aufweist. Einerseits wird angenommen, dass das lonomer-beschichtete Nanomaterial wie eine protonenleitende Brücke zwischen den eigentlichen katalytischen Zentren der Zusammensetzung, dem katalytisch aktiven Material, funktioniert und somit einen verbesserten Protonentransport durch die katalytische Schicht ermöglicht. Ferner scheint das lonomer-beschichtete Nanomaterial der Aufrechterhaltung der strukturellen Integrität der katalytischen Schicht zu dienen. Durch die Beschichtung des Kohlenstoff-Nanomaterials mit dem lonomer wird vermieden, dass das katalytische Material, bei dem es sich typischerweise um ein Edelmetall handelt, in direkten Kontakt mit dem wesentlich unedleren Kohlenstoff kommt. Somit wird eine durch die unterschiedlichen elektrochemischen Potentiale von Kohlenstoff und dem Edelmetall hervorgerufene Korrosion des Kohlenstoff-Nanomaterials verhindert, sodass dessen Funktion über lange Betriebsdauern erhalten bleibt.

Unter einem lonomer wird ein Polymer (Makromolekül) verstanden, dessen Konstitutionseinheiten teilweise ionische oder ionisierbare Gruppen aufweisen, die als Seitenketten an dem Polymerrückgrad kovalent gebunden vorliegen. Somit handelt es sich zumeist um ein Copolymer aus elektrischen neutralen Konstitutionseinheiten sowie ionischen oder ionisierbaren Konstitutionseinheiten. Dabei ist der Anteil der ionischen/ionisierbaren Konstitutionseinheiten regelmäßig niedriger als der der neutralen Konstitutionseinheiten, und beträgt typischerweise 1 bis 15 Mol-% bezogen auf die Gesamtanzahl der das lonomer aufbauenden Konstitutionseinheiten.

Das erste, das Kohlenstoff-Nanomaterial einkapselnde lonomer und das zweite lonomer der Bindemittelzusammensetzung können gleich oder unterschiedlich sein. In bevorzugter Ausgestaltung der Erfindung sind die beiden lonomere unterschiedlich zumindest in Bezug auf ihre Äquivalenzmassen. Durch die Verwendung von lonomeren mit unterschiedlicher Äquivalenzmasse werden die Protonenleitfähigkeit und ihre Langzeitstabilität weiter verbessert. Vorzugsweise weist das erste lonomer eine kleinere Äquivalenzmasse (EW für *equivalent weight*) auf als das zweite lonomer. In vorteilhafter Ausgestaltung der Erfindung weist das erste, das Kohlenstoff-Nanomaterial einkapselnde lonomer eine Äquivalenzmasse kleiner als 850 auf. Dabei ist die Äquivalenzmasse EW definiert als die Molekularmasse des lonomers pro ionische oder ionisierbare Gruppe, beispielsweise pro Sulfonsäuregruppe. Die Äquivalenzmasse EW kann bestimmt werden wie in Mauritz et al im Falle von Nafion beschrieben (Mauritz, K. A., Moore, R. B.: "State of Understanding of Nafion" Chemical Reviews 104 (10) (2004): 4535-4585).

Das katalytisch aktive Material liegt auf einem Kohlenstoffträger geträgert (immobilisiert) vor. Der Kohlenstoffträger dient einerseits der elektrischen Anbindung des katalytischen Materials und andererseits der Bereitstellung einer hohen spezifischen Oberfläche, die zu einer hohen Zugänglichkeit der katalytischen Zentren führt. Ferner verhindert die Immobilisierung des katalytisch aktiven Materials auf dem Kohlenstoffträger das Zusammenwachsen der Katalysatorpartikel und der damit verbundenen Abnahme der elektrokatalytischen Oberfläche. Der Kohlenstoffträger und das Kohlenstoff-Nanomaterial können gleich oder unterschiedlich sein. In dieser Ausführung enthält die Zusammensetzung sowohl das lonomer-beschichtete Kohlenstoff-Nanomaterial als auch das mit dem katalytisch aktiven Material beladene Kohlenstoffträgermaterial als unabhängige nicht miteinander verbundene Bestandteile.

Die Bindemittelzusammensetzung kann neben dem zweiten lonomer weitere Bestandteile enthalten, insbesondere ein Lösungsmittel für das zweite lonomer.

Vorzugsweise beträgt eine mittlere Schichtdicke des ersten lonomers auf dem Kohlenstoff-Nanomaterial 5 bis 20 nm, insbesondere 8 bis 12 nm. Bekanntermaßen hängt die Protonenleitfähigkeit von lonomerschichten stark von deren Schichtdicken ab, wobei die Protonenleitfähigkeit mit geringeren Schichtdicken zunimmt. Die genannten oberen Grenzen stellen einerseits eine durchgehende Einhüllung des Nanomaterials durch das zweite lonomer sicher. Andererseits sind die Schichtdicken dünn genug, um eine hohe Protonenleitfähigkeit zu gewährleisten.

Die Erfindung betrifft ferner ein Verfahren zur Herstellung der erfindungsgemäßen katalytischen Zusammensetzung. Das Verfahren umfasst die Schritte:
(a) Mischen eines Kohlenstoff-Nanomaterials mit einem ersten lonomer in einem Lösungsmittel und Aussetzen der Mischung vorbestimmten Temperatur- und Druckbedingungen unter Ausbilden eines lonomer-beschichteten Kohlenstoff-Nanomaterials und
(b) Mischen des lonomer-beschichteten Kohlenstoff-Nanomaterials mit einem katalytisch aktiven Material in partikulärer Form und einer Bindemittelzusammensetzung, die ein zweites lonomer umfasst, wobei das erste und das zweite lonomer gleich oder unterschiedlich sind.

Das Herstellungsverfahren ist somit ein zweistufiges Verfahren, wobei in der ersten Stufe das lonomer-beschichtete Kohlenstoff-Nanomaterial hergestellt wird und in der zweiten Stufe die Bestandteile der Zusammensetzung zusammengefügt werden. Dieses zweistufige Verfahren führt zu der beschriebenen katalytischen Zusammensetzung gemäß der Erfindung.

Die in Stufe (a) angewandten Temperatur- und Druckbedingungen sowie auch die Wahl des Lösungsmittels führen zu einer stabilen lonomerbeschichtung auf dem Nanomaterial, welche auch in der Bindemittelzusammensetzung des nachfolgenden Schritts (b) nicht aufgelöst wird. Vorzugsweise umfassen die vorbestimmten Temperaturbedingungen eine Temperatur im Bereich von 40 bis 150°C, insbesondere im Bereich von 80 bis 130°C, und/oder die vorbestimmten Druckbedingungen einen Druck im Bereich von Umgebungsdruck bis 1050 kPa. Unter diesen Bedingungen wird eine langzeitstabile Beschichtung des ersten lonomers auf dem Nanomaterial erzielt. Weiterhin wird vorzugsweise als Lösungsmittel in diesem Schritt ein Alkohol, beispielsweise ein Alkylalkohol wie Methanol, Ethanol, n-Propanol oder iso-Propanol, oder Wasser oder eine Mischung von diesen verwendet.

Optional kann zwischen den Stufen (a) und (b) ein Trocknungsschritt erfolgen, um das Lösungsmittel aus Stufe (a) zu entfernen und die lonomerschicht zu trocknen.

Ein weiterer Aspekt der Erfindung betrifft die Verwendung der erfindungsgemäßen katalytischen Zusammensetzung zur Herstellung einer katalytischen Schicht einer Brennstoffzellenelektrode. Insbesondere handelt es sich bei der Brennstoffzellenelektrode um eine katalytisch beschichtete Membran für eine Brennstoffzelle, also einer Polymerelektrolytmembran, die zumindest einseitig, vorzugsweise beidseitig mit einer katalytischen Schicht der Zusammensetzung beschichtet ist. Alternativ handelt es sich bei der Brennstoffzellenelektrode um eine Gasdiffusionselektrode für eine Brennstoffzelle, also eine gasdurchlässige Gasdiffusionsschicht, die auf einer ihrer Flachseiten mit einer katalytischen Schicht der Zusammensetzung beschichtet ist. Die Brennstoffzellenelektrode dient als Anode oder Kathode in der Brennstoffzelle. In Ausgestaltungen können die katalytischen Schichten von Anode und Kathode sich voneinander unterscheiden, insbesondere in der Wahl des katalytisch aktiven Materials.

Die Herstellung der katalytischen Schicht erfolgt, indem mittels eines beliebigen Verfahrens, umfassend Gießen, Streichen, Sprühen, Tauchen, Rakeln und so weiter, die katalytische Zusammensetzung auf das entsprechende Substrat (Polymerelektrolytmembran oder Gasdiffusionsschicht) als dünne Schicht aufgebracht wird. Anschließend wird die Schicht getrocknet, um das Lösungsmittel zu entfernen. Optional kann vor dem Trocknen die Brennstoffzelle eventuell beschichtete Membran mit der eventuell beschichteten Gasdiffusionsschicht zusammengesetzt werden und erst dann der Trockenprozess durchgeführt werden.

Ein weiterer Aspekt der Erfindung betrifft eine Brennstoffzelle mit einer katalytischen Schicht hergestellt aus einer katalytischen Zusammensetzung gemäß der Erfindung.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Schnittdarstellung einer Brennstoffzelle mit einem erfindungsgemäßen Katalysatormaterial;
- Figur 2: eine stark schematisierte Darstellung einer katalytischen Zusammensetzung für eine Brennstoffzelle gemäß Stand der Technik und
- Figur 3: eine stark schematisierte Darstellung einer katalytischen Zusammensetzung für eine Brennstoffzelle gemäß einer Ausführung der Erfindung.

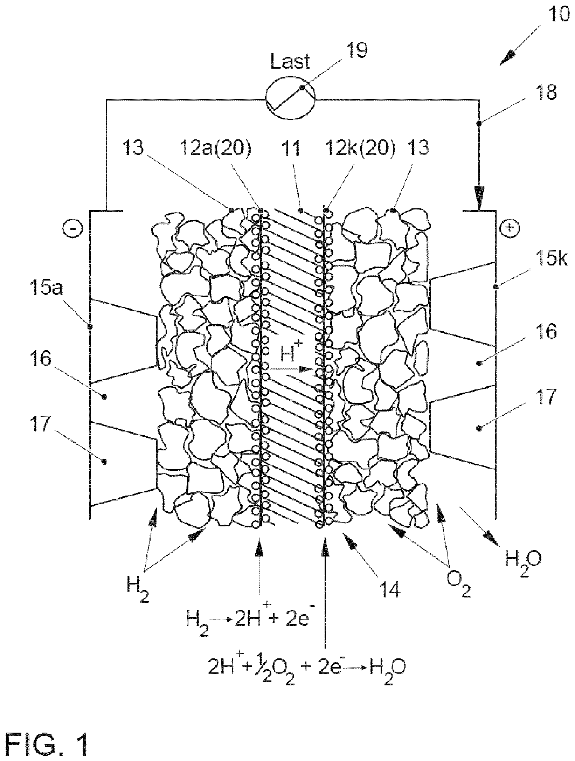

Figur 1 zeigt den Aufbau einer Brennstoffzelle 10 in einer schematischen Schnittdarstellung. Kernstück der Brennstoffzelle 10 ist eine insgesamt mit 14 bezeichnete Membran-Elektroden-Anordnung (MEA). Die MEA 14 umfasst eine Polymerelektrolytmembran 11, zwei auf deren Flachseiten angeordnete katalytische Schichten oder katalytische Beschichtungen, nämlich eine Anode 12a und eine Kathode 12k, sowie zwei beidseitig daran angeordnete Gasdiffusionslagen 13. Bei der Polymerelektrolytmembran 11 handelt es sich um ein Ionen leitendes, insbesondere Protonen leitendes Polymer, beispielsweise ein unter dem Handelsnamen Nafion® vertriebenes Produkt. Die Gasdiffusionslagen 13 bestehen aus einem gasdurchlässigen elektrisch leitfähigen Material, das beispielsweise die Struktur eines Schaums oder eine Faserstruktur oder dergleichen aufweist und der Verteilung der Reaktionsgase an die katalytischen Schichten 12a und 12k dient. Die katalytischen Schichten 12a, 12k sind aus der katalytischen Zusammensetzung gemäß der Erfindung hergestellt und sind im dargestellten Beispiel als beidseitige Beschichtungen der Membran 11 ausgeführt. Ein solches Gefüge wird auch als CCM (catalyst coated membrane) bezeichnet. Alternativ können die katalytischen Schichten 12a, 12k als Beschichtungen der Gasdiffusionslagen 13 ausgeführt sein, sodass man von Gasdiffusionselektroden spricht.

Beidseitig an die Membran-Elektroden-Anordnung 14 schließen Bipolarplatten 15 an, nämlich eine Anodenplatte 15a und eine Kathodenplatte 15k. Üblicherweise sind eine Vielzahl solcher Einzelzellen 10 zu einem Brennstoffzellenstapel gestapelt, sodass jede Bipolarplatte sich aus einer Anodenplatte 15a und einer Kathodenplatte 15k zusammensetzt. Die Bipolarplatten 15a, 15k umfassen jeweils eine Struktur von Reaktantenkanälen 16, die in Richtung der Gasdiffusionslagen 13 offen ausgebildet sind und der Zuführung und Verteilung der Reaktanten der Brennstoffzelle dienen. So wird über die Reaktantenkanäle 16 der Anodenplatte 15a der Brennstoff, hier Wasserstoff H₂, zugeführt und über die entsprechenden Kanäle 16 der Kathodenplatte 15k Sauerstoff O₂ oder ein sauerstoffhaltiges Gasgemisch, insbesondere Luft. Die Bipolarplatten 15a, 15k sind über einen äußeren Stromkreis 18 miteinander und mit einem elektrischen Verbraucher 19, beispielsweise einen Traktionsmotor für ein Elektrofahrzeug oder eine Batterie, verbunden.

Im Betrieb der Brennstoffzelle 10 wird über die Reaktantenkanäle 16 der Anodenplatte 15a der Wasserstoff zugeführt, über die anodenseitige Gasdiffusionslage 13 verteilt und der katalytischen Anode 12a zugeführt. Hier erfolgt eine katalytische Dissoziation und Oxidation von Wasserstoff H₂ zu Protonen H⁺ unter Abgabe von Elektronen, die über den Stromkreis 18 abgeführt werden. Auf der anderen Seite wird über die Kathodenplatte 15k der Sauerstoff über die kathodenseitige Gasdiffusionslage 13 zu der katalytischen Kathode 12k geleitet. Gleichzeitig diffundieren die anodenseitig gebildeten Proteinen H⁺ über die Polymerelektrolytmembran 11 in Richtung Kathode 12k. Hier reagiert an dem katalytischen Edelmetall der zugeführte Luftsauerstoff unter Aufnahme von den über den äußeren Stromkreis 18 zugeführten Elektronen mit den Protonen zu Wasser, welches mit dem Reaktionsgas aus der Brennstoffzelle 10 abgeführt wird. Durch den so erzeugten elektrischen Stromfluss kann der elektrische Verbraucher 19 versorgt werden.

Die katalytische Schicht gemäß der vorliegenden Erfindung kann für die Anode 12a und/oder die Kathode 12k von Brennstoffzellen verwendet werden. Die mit der erfindungsgemäßen katalytischen Schicht 12a, 12k ausgestattete Brennstoffzelle 10 zeichnet sich durch einen verbesserten Protonentransport durch die katalytische Schicht 12a, 12k, insbesondere bei niedrigen relativen Feuchten aus. Die gute Protonenleitfähigkeit besteht dabei nicht nur bei neuer Brennstoffzelle, sondern auch über eine lange Betriebsdauer.

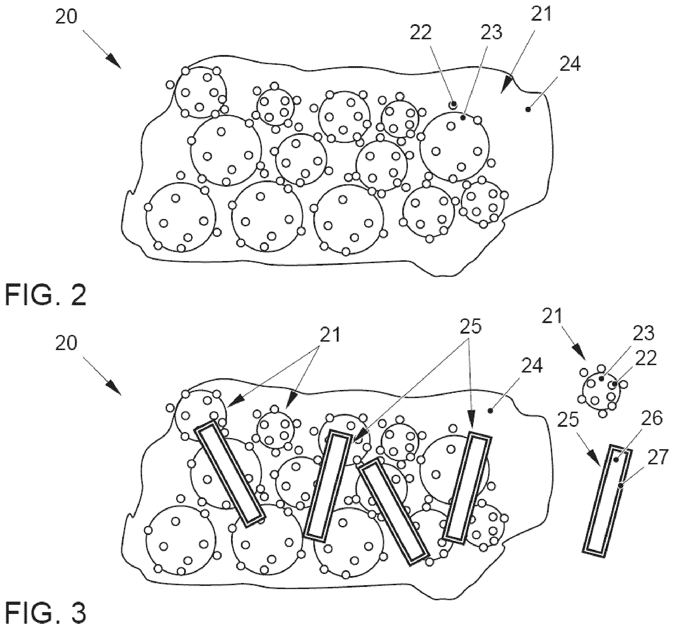

Figur 2 zeigt eine insgesamt mit 20' bezeichnete katalytische Zusammensetzung für eine Brennstoffzellenelektrode gemäß Stand der Technik. Die Zusammensetzung 20' umfasst einen geträgerten Katalysator 21, der einen Kohlenstoffträger 23 und ein darauf immobilisiertes (geträgertes) katalytisch aktives Material 22 umfasst. Der geträgerte Katalysator 21 liegt in einer Bindemittelzusammensetzung 24 dispergiert vor, die im Wesentlichen aus einem lonomer 24 und einem Lösungsmittel für dieses besteht.

Eine erfindungsgemäße katalytische Zusammensetzung 20 für eine Brennstoffzellenelektrode ist in einer bevorzugten Ausführung in Figur 3 dargestellt. Die katalytische Zusammensetzung 20 umfasst wiederum einen geträgerten Katalysator 21, der einen Kohlenstoffträger 23 und ein darauf immobilisiertes (geträgertes) katalytisch aktives Material 22 umfasst. Der geträgerte Katalysator 21 ist in der Detaildarstellung der Figur 3 isoliert dargestellt. Die Zusammensetzung umfasst ferner ein Kohlenstoff-Nanomaterial 26, das mit einem lonomer (erstes lonomer) 27 beschichtet ist. Dieses lonomer-beschichtete Kohlenstoff-Nanomaterial 25 ist in der Detaildarstellung der Figur 3 ebenfalls isoliert dargestellt. Der geträgerte Katalysator 21 sowie das lonomer-beschichtete Kohlenstoff-Nanomaterial 25 liegen in einer Bindemittelzusammensetzung 24 dispergiert vor, die im Wesentlichen aus einem lonomer (zweites lonomer) 24 und einem Lösungsmittel für dieses besteht. Das erste und zweite lonomer können gleich oder unterschiedlich sein.

Das katalytisch aktive Material 22 der erfindungsgemäßen Zusammensetzung 20 stellt den eigentlichen Katalysator für die zu katalysierende Brennstoffzellenreaktion an Anode oder Kathode dar. Das katalytisch aktive Material 22 umfasst vorzugsweise Platin (Pt) oder eine Platinlegierung, in der Platin mit Ruthenium, Iridium, Rhodium, Palladium, Osmium, Wolfram, Blei, Eisen, Chrom, Kobalt, Nickel, Mangan, Vanadium, Molybdän, Gallium, Aluminium, und deren Kombinationen legiert ist.

Das Kohlenstoff-Nanomaterial 26 umfasst jegliche bekannte Nanostruktur aus Kohlenstoff, insbesondere Kohlenstoff-Nanoröhrchen (carbon nanotubes CNT), Kohlenstoff-Nanofasern (carbon nanofibres CNF), Kohlenstoff-Nanokugeln, Kohlenstoff-Nanohörnchen (carbon nanohorns), Kohlenstoff-Nanoringe (carbon nanorings), Graphit, Kohlenstoffnanopulver, Vulcan, Carbonschwarz (carbon black), Acetylenschwarz (acetylene black), aktivierter Kohlenstoff, Fulleren, und deren Mischungen. Von diesen sind Kohlenstoff-Nanoröhrchen (CNT) und Kohlenstoff-Nanofasern (CNF) bevorzugt.

Der Kohlenstoffträger 23 für das katalytisch aktive Material 22 kann grundsätzlich aus den gleichen für das Kohlenstoff-Nanomaterial 26 genannten Materialien oder anderen gewählt werden. Von diesen sind Graphit, Kohlenstoffnanopulver, Vulcan, Carbonschwarz (carbon black), Acetylenschwarz (acetylene black), aktivierter Kohlenstoff und Kohlenstoffpulver und deren Mischungen bevorzugt.

Das erste lonomer 27 und das zweite lonomer 24 sind unabhängig voneinander als ein Polymer verstanden, dessen Konstitutionseinheiten teilweise ionische oder ionisierbare Gruppen aufweisen, insbesondere Carboxy- und/oder Sulfonsäuregruppen, die als Seitenketten an dem Polymerrückgrad kovalent gebunden vorliegen. Vorzugsweise handelt es sich um ein Copolymer aus elektrischen neutralen Konstitutionseinheiten sowie ionischen/ionisierbaren Konstitutionseinheiten. Beispielsweise basiert das erste und/oder zweite lonomer 27, 24 auf Fluoro-basierten Polymeren, Benzimidazol-basierten Polymeren, Polyimid-basierten Polymeren, Polyetherimid- basierten Polymeren, Polyphenylensulfid-basierten Polymeren, Polysulfonbasierten Polymeren, Polyethersulfon-basierten Polymeren, Polyetherketon-basierten Polymeren, Polyetheretherketon-basierten Polymeren, und Polyphenylchinoxalin-basierten Polymeren beziehungsweise deren Konstitutionseinheiten. Spezielle Beispiele sind Poly(perfluorsulfonsäure), Poly(perfluorcarbonsäure), Copolymere aus Tetrafluorethylen und Fluorovinylether mit Sulfonsäuregruppen, fluoriertes Polyetherketonsulfid, Arylketon, Poly(2,2'-(m-phenylen)-5,5'-bibenzimidazol), und Poly(2,5-benzimidazol).

Die katalytische Zusammensetzung gemäß der Erfindung kann durch ein zweistufiges Verfahren hergestellt werden, bei dem in der ersten Stufe das Kohlenstoff-Nanomaterial 26 mit einer Lösung des ersten lonomers 27 unter Erhalt des ionomer-beschichteten Kohlenstoff-Nanomaterials 25 beschichtet und optional getrocknet wird. In einer zweiten Stufe wird das so hergestellte ionomer-beschichtete Kohlenstoff-Nanomaterial 25 in einem Schritt oder sukzessiv mit dem (optional geträgerten) katalytisch aktiven Material 22 und mit der das eine Lösung des zweiten lonomers 24 enthaltende Bindemittelzusammensetzung vermischt. Sofern ein bereits geträgertes katalytisch aktives Material 22 eingesetzt wird, wird eine Zusammensetzung gemäß Figur 3 erhalten, welche das ionomer-beschichtete Kohlenstoff-Nanomaterial 25 sowie das geträgerte katalytisch aktive Material 21 als unabhängige Feststoffkomponenten, die in der Bindemittelzusammensetzung 24 dispergiert sind, enthält.

Um eine katalytische Schicht 12a, 12k (siehe Figur 1) aus der erfindungsgemäßen katalytischen Zusammensetzung herzustellen, wird diese mit einer geeigneten, an sich beliebigen Methode auf das entsprechende Substrat, insbesondere der Membran 11 oder den Diffusionsschichten 13 als dünne Schicht aufgebracht, getrocknet und die Komponenten zur Brennstoffzelle 10 zusammengesetzt. Optional kann das Trocknen auch erst nach dem Zusammensetzen erfolgen.

### Bezugszeichenliste

- 10: Brennstoffzelle
- 11: Polymerelektrolytmembran
- 12: katalytische Schicht / katalytische Elektrode
- 12a: Anode
- 12k: Kathode
- 13: Gasdiffusionsschicht
- 14: Membran-Elektroden-Anordnung
- 15: Bipolarplatte
- 15a: Anodenplatte
- 15k: Kathodenplatte
- 16: Reaktantenkanal
- 17: Kühlmittelkanal
- 18: Stromkreis
- 19: elektrischer Verbraucher / elektrische Last

- 20: katalytische Zusammensetzung gemäß Erfindung
- 20': katalytische Zusammensetzung gemäß Stand der Technik
- 21: geträgerter Katalysator
- 22: katalytisch aktives Material
- 23: Kohlenstoffträger
- 24: Bindemittelzusammensetzung / zweites lonomer
- 25: lonomer-beschichtetes Kohlenstoff-Nanomaterial
- 26: Kohlenstoff-Nanomaterial
- 27: erstes lonomer / lonomerbeschichtung

## Patentansprüche

1. Katalytische Zusammensetzung (20) zur Herstellung einer katalytischen Schicht (12a, 12k) einer Brennstoffzellenelektrode (12), umfassend
ein katalytisch aktives Material (22) in partikulärer Form, das auf einem Kohlenstoffträger (23) geträgert vorliegt,
ein Kohlenstoff-Nanomaterial (26), das mit einem ersten lonomer (27) beschichtet ist, sowie
eine Bindemittelzusammensetzung, in der das katalytisch aktive Material (22) und das ionomer-beschichtete Kohlenstoff-Nanomaterial (25) dispergiert vorliegen, wobei die Bindemittelzusammensetzung ein zweites lonomer (24) umfasst und das erste und das zweite lonomer (27, 24) gleich oder unterschiedlich sind.

2. Katalytische Zusammensetzung (20) nach Anspruch 1, **dadurch gekennzeichnet, dass** erste und zweite lonomer (27, 24) unterschiedlich sind und das erste lonomer (27) eine kleinere Äquivalenzmasse aufweist als das zweite lonomer (24), wobei das erste lonomer (27) vorzugsweise eine Äquivalenzmasse EW kleiner als 850 aufweist.

3. Katalytische Zusammensetzung (20) nach Anspruch 1 oder 2, **dadurch gekennzeichnet, dass** der Kohlenstoffträger (23), auf dem das katalytisch aktive Material (22) geträgert vorliegt, und das Kohlenstoff-Nanomaterial (26) gleich oder unterschiedlich sind.

4. Katalytische Zusammensetzung (20) nach einem der vorhergehenden Ansprüche, **dadurch gekennzeichnet, dass** eine mittlere Schichtdicke des ersten lonomers (27) auf dem Kohlenstoff-Nanomaterial (26) 5 bis 20 nm, insbesondere 8 bis 12 nm beträgt.

5. Verfahren zur Herstellung einer katalytischen Zusammensetzung nach einem der Ansprüche 1 bis 4, umfassend die Schritte:
(a) Mischen eines Kohlenstoff-Nanomaterials (26) mit einem ersten lonomer (27) in einem Lösungsmittel und Aussetzen der Mischung vorbestimmten Temperatur- und Druckbedingungen unter Ausbilden eines lonomer-beschichteten Kohlenstoff-Nanomaterials (25) und
(b) Mischen des lonomer-beschichteten Kohlenstoff-Nanomaterials (25) mit einem katalytisch aktiven Material (22) in partikulärer Form und einer Bindemittelzusammensetzung (24), die ein zweites lonomer (24) umfasst, wobei das erste und das zweite lonomer (24) gleich oder unterschiedlich sind.

6. Verfahren nach Anspruch 5, **dadurch gekennzeichnet, dass** die vorbestimmten Temperaturbedingungen eine Temperatur im Bereich von 40 bis 150°C umfassen.

7. Verfahren nach Anspruch 5 oder 6, **dadurch gekennzeichnet, dass** die vorbestimmten Druckbedingungen einen Druck im Bereich von Umgebungsdruck bis 1050 kPa umfassen.

8. Verfahren nach einem der vorhergehenden Ansprüche 5 bis 7, **dadurch gekennzeichnet, dass** das Lösungsmittel in Schritt (a) ein Alkohol, Wasser oder eine Mischung von diesen ist.

9. Verwendung einer katalytischen Zusammensetzung (20) nach einem der Ansprüche 1 bis 4 zur Herstellung einer katalytischen Schicht (12a, 12k) einer Brennstoffzellenelektrode, insbesondere einer katalytisch beschichteten Membran für eine Brennstoffzelle (10) oder einer Gasdiffusionselektrode für eine Brennstoffzelle (10).

10. Brennstoffzelle (10) mit einer katalytischen Schicht (12a, 12k) hergestellt aus einer katalytischen Zusammensetzung (20) nach einem der Ansprüche 1 bis 4.

## Claims

1. Catalytic composition (20) for preparing a catalytic layer (12a, 12k) of a fuel cell electrode (12), comprising
a catalytically active material (22) in particulate form, which is present supported on a carbon carrier (23),
a carbon nanomaterial (26), which is coated with a first ionomer (27), and
a binding agent composition in which the catalytically active material (22) and the ionomer-coated carbon nanomaterial (25) are present in dispersed form, wherein the binding agent composition comprises a second ionomer (24) and the first and the second ionomer (27, 24) are the same or different.

2. Catalytic composition (20) according to claim 1, **characterised in that** first and second ionomers (27, 24) are different and the first ionomer (27) has a smaller equivalent mass than the second ionomer (24), wherein the first ionomer (27) preferably has an equivalent mass EW of less than 850.

3. Catalytic composition (20) according to claim 1 or 2, **characterised in that** the carbon carrier (23) on which the catalytically active material (22) is supported, and the carbon nanomaterial (26) are the same or different.

4. Catalytic composition (20) according to any of the preceding claims, **characterised in that** a middle layer thickness of the first ionomer (27) on the carbon nanomaterial (26) is 5 to 20 nm, in particular 8 to 12 nm.

5. Process for the preparation of a catalytic composition according to any of claims 1 to 4, comprising the steps:
(a) mixing a carbon nanomaterial (26) with a first ionomer (27) in a solvent and exposing the mixture to predetermined temperature and pressure conditions by forming an ionomer-coated carbon nanomaterial (25) and
(b) mixing the ionomer-coated carbon nanomaterial (25) with a catalytically active material (22) in particulate form and a binding agent composition (24), which comprises a second ionomer (24), wherein the first and the second ionomer (24) are the same or different.

6. Process according to claim 5, **characterised in that** the predetermined temperature conditions include a temperature in the range of 40 to 150 °C.

7. Process according to claim 5 or 6, **characterised in that** the predetermined pressure conditions include a pressure in the range from environmental pressure to 1050 kPa.

8. Process according to any of the preceding claims 5 to 7, **characterised in that** the solvent in step (a) is an alcohol, water or a mixture of the latter.

9. Use of a catalytic composition (20) according to any of claims 1 to 4 for the preparation of a catalytic layer (12a, 12k) of a fuel cell electrode, in particular a catalytically coated membrane for a fuel cell (10) or a gas diffusion electrode for a fuel cell (10).

10. Fuel cell (10) with a catalytic layer (12a, 12k) prepared from a catalytic composition (20) according to any of claims 1 to 4.

## Revendications

1. Composition catalytique (20) pour la fabrication d'une couche catalytique (12a, 12k) d'une électrode de pile à combustible (12), comprenant
un matériau actif catalytique (22) dans une forme particulière, qui est supporté sur un support carboné (23),
un nanomatériau carboné (26) qui est couvert d'une couche d'un premier ionomère (27), ainsi que
une composition d'agent de liaison, dans laquelle le matériau actif catalytique (22) et le nanomatériau carboné couvert d'une couche d'ionomère (25) sont dispersés, selon laquelle la composition d'agent de liaison comprend un second ionomère (24) et le premier et le second ionomère (27, 24) sont les mêmes ou différents.

2. Composition catalytique (20) selon la revendication 1, **caractérisée en ce que** les premier et second ionomères (27, 24) sont différents et le premier ionomère (27) présente un poids équivalent plus petit que le second ionomère (24), selon laquelle le premier ionomère (27) présente de préférence un poids équivalent EW plus petit que 850.

3. Composition catalytique (20) selon la revendication 1 ou 2, **caractérisée en ce que** le support carboné (23), sur lequel le matériau actif catalytique (22) est supporté, et le nanomatériau carboné (26) sont les mêmes ou différents.

4. Composition catalytique (20) selon l'une des revendications précédentes, **caractérisée en ce qu'**une épaisseur de couche médiane du premier ionomère (27) sur le nanomatériau carboné (26) se chiffre à 5 à 20 nm, en particulier à 8 à 12 nm.

5. Procédé pour fabriquer une composition catalytique selon l'une des revendications 1 à 4, comprenant les étapes :
a) de mélange d'un nanomatériau carboné (26) avec un premier ionomère (27) dans un solvant et de soumission du mélange à des conditions de température et de pression prédéfinies en formant un nanomatériau carboné couvert d'une couche d'ionomère (25) et
b) de mélange du nanomatériau carboné couvert d'une couche d'ionomère (25) avec un matériau actif catalytique (22) dans une forme particulière et une composition d'agent de liaison (24), qui comprend un second ionomère (24), selon lequel le premier et le second ionomère (24) sont les mêmes ou différents.

6. Procédé selon la revendication 5, **caractérisé en ce que** les conditions de température prédéfinies comprennent une température dans la plage de 40 à 150°C.

7. Procédé selon la revendication 5 ou 6, **caractérisé en ce que** les conditions de pression prédéfinies comprennent une pression dans la plage de pression ambiante jusque 1050 kPa.

8. Procédé selon l'une des revendications précédentes 5 à 7, **caractérisé en ce que** le solvant dans l'étape (a) est un alcool, de l'eau ou un mélange de ceux-ci.

9. Utilisation d'une composition catalytique (20) selon l'une des revendications 1 à 4 pour fabriquer une couche catalytique (12a, 12k) d'une électrode de pile à combustible, en particulier d'une membrane couverte d'une couche catalytique pour une pile à combustible (10) ou d'une électrode à diffusion de gaz pour une pile à combustible (10).

10. Pile à combustible (10) avec une couche catalytique (12a, 12k) fabriquée à partir d'une composition catalytique (20) selon l'une des revendications 1 à 4.
